# EUROPEAN PATENT APPLICATION

(11) **EP 4 591 971 A1**
(43) Date of publication of application: **30.07.2025**
(21) Application number: 24154175.4
(22) Date of filing: 26.01.2024
(51) Int. Cl.: B01J 4/00, B01J 19/00

(54) **SYSTEM AND METHOD FOR PRODUCTION OF LINEAR ALPHA OLEFINS**

(71) Applicant: SABIC Global Technologies B.V., 4612 PX Bergen op Zoom (NL)
(72) Inventor: Binmngash, Nabil Saleh, 4612 PX Bergen op Zoom (NL); Marghalani, Omar A., 4612 PX Bergen op Zoom (NL); Al-Dughaither, Abdullah Saad, 4612 PX Bergen op Zoom (NL); Azam, Shahid, 4612 PX Bergen op Zoom (NL); Bai, Hua, 4612 PX Bergen op Zoom (NL)
(74) Representative: Hoeger, Stellrecht & Partner Patentanwälte mbB

(57) **Abstract**

The disclosure provides a reaction system for production of linear alpha olefins, including: a vessel having a side wall defining an internal reaction chamber containing a liquid reaction mixture, the vessel having an overhead outlet for a gaseous effluent and a bottom outlet for a liquid effluent; one or more spray nozzles between the overhead outlet and the liquid reaction mixture for spraying a solvent into the reaction chamber; and a solid unperforated plate mounted within the reaction chamber between the one or more spray nozzles and the liquid reaction mixture, the plate having an outer peripheral edge in spaced relation to the side wall of the vessel such that gaseous effluent from the vessel can flow past the plate to the overhead outlet. The disclosure also provides a process for producing linear alpha olefins using the reaction system.

## Description

### TECHNOLOGICAL FIELD

The present disclosure relates to systems and methods for producing linear alpha olefin products.

### BACKGROUND

Linear olefins are a class of hydrocarbons useful as raw materials in the petrochemical industry and among these the linear alpha olefins, unbranched olefins whose double bond is located at a terminus of the chain, form an important subclass. Linear alpha olefins can be converted to linear primary alcohols by hydroformylation. Hydroformylation can also be used to prepare aldehydes, which in turn can be oxidized to afford synthetic fatty acids, especially those with an odd carbon number, useful in the production of lubricants. Linear alpha olefins are also used in the production of detergents, such as linear alkylbenzenesulfonates, which are prepared by Fiedel-Crafts reaction of benzene with linear olefins followed by sulfonation.

Preparation of alpha olefins is based largely on oligomerization of ethylene, which has a corollary that the alpha-olefins produced have an even number of carbon atoms. Oligomerization processes for ethylene mainly utilize organoaluminum compounds or transition metals as catalysts. Oligomerization methods are typically carried out in the presence of a catalyst that includes a zirconium component, such as zirconium tetraisobutyrate, and an aluminum component as activator, such as ethyl aluminum sesquichloride. Typically, the effluent from the reactor used to produce the linear alpha olefins is directed to one or more distillation columns to separate the various fractions of linear alpha olefins.

Excess ethylene from the oligomerization reaction is typically removed in an overhead stream from the reactor and eventually recycled for reuse in the reaction. One problem associated with the oligomerization reaction is polymer fouling in the ethylene recycle loop. Such fouling can lead to undesirable reactor shutdowns and present removal challenges. There remains a need in the art for improved techniques to address polymer fouling within the reaction system.

### BRIEF SUMMARY

Example implementations of the present disclosure are directed to systems and processes for preventing polymer fouling in an ethylene recycle loop associated with an oligomerization reactor. Polymer fouling in the form of liquid droplets, typically referred to as "carry-over," is often entrained in the gaseous ethylene leaving the overhead of the oligomerization reactor. In many oligomerization reactors, the problem of carry-over is exacerbated by the spraying of solvent into the reaction chamber, which can lead to generation of a mist when the sprayed solvent impinges on the liquid reaction mixture within the reactor. It has been discovered that placement of a solid unperforated plate mounted within the oligomerization reaction chamber between spray nozzles introducing solvent into the reactor and the liquid reaction mixture can prevent or reduce polymer fouling of downstream equipment, which can reduce reactor downtime, reduce cleaning chemical consumption, and minimize fouling rate during production. Certain embodiments of the present disclosure are characterized by reduced catalyst consumption, increased interval between shutdowns adapted to remove fouling from the reactor or any downstream apparatus in fluid communication with a gaseous effluent from the reactor; and/or reduced condensate produced upon cooling a gaseous effluent from the reactor.

The present disclosure includes, without limitation, the following embodiments.

Embodiment 1: A reaction system for production of linear alpha olefins, comprising: a vessel having a side wall defining an internal reaction chamber containing a liquid reaction mixture, the vessel having an overhead outlet for a gaseous effluent and a bottom outlet for a liquid effluent; one or more spray nozzles between the overhead outlet and the liquid reaction mixture for spraying a solvent into the reaction chamber; and a solid unperforated plate mounted within the reaction chamber between the one or more spray nozzles and the liquid reaction mixture, the plate having an outer peripheral edge in spaced relation to the side wall of the vessel such that gaseous effluent from the vessel can flow past the plate to the overhead outlet.

Embodiment 2: The reaction system of Embodiment 1, wherein both the plate and the side wall of the vessel have a diameter, and the ratio of the diameter of the plate to the diameter of the side wall of the vessel is about 0.2 to about 0.8, such as about 0.3 to about 0.6.

Embodiment 3: The reaction system of Embodiment 1 or 2, wherein the plate comprises a central portion and an outer portion surrounding the central portion, the outer portion extending from the central portion to the outer peripheral edge, and wherein at least the outer portion is sloped toward the liquid reaction mixture.

Embodiment 4: The reaction system of any one of Embodiments 1-3, wherein an angle of slope of the outer portion of the plate is about 0.1 to about 20 degrees with respect to a horizontal plane, such as an angle of slope of about 2 to about 10 degrees.

Embodiment 5: The reaction system of any one of Embodiments 1-4, wherein the liquid reaction mixture has a surface facing the plate, and the plate is spaced from the one or more spray nozzles by a distance of at least 40% of the distance from the one or more spray nozzles to the surface of the liquid reaction mixture.

Embodiment 6: The reaction system of any one of Embodiments 1-5, further comprising a mounting bracket connected to the plate by one or more struts, optionally wherein one or more of the plate, the struts, and the mounting bracket are constructed of a metal.

Embodiment 7: The reaction system of any one of Embodiments 1-6, further comprising a gas distribution apparatus within the reaction chamber for introducing a gaseous reagent to the liquid reaction mixture, optionally wherein the gas distribution apparatus includes one or more of a gas sparger plate and a gas bubbler.

Embodiment 8: A process for producing linear alpha olefins, comprising: contacting ethylene gas with a liquid reaction mixture comprising a catalyst and a solvent in a reactor, wherein the reactor comprises a side wall defining an internal reaction chamber containing the liquid reaction mixture and a solid unperforated plate mounted within the reaction chamber, the plate having an outer peripheral edge in spaced relation to the side wall of the reactor; spraying a solvent into the reactor using one or more spray nozzles such that solvent impinges on the plate prior to contacting the liquid reaction mixture; withdrawing a product stream comprising at least one linear alpha olefin, such as 1-butene, 1-hexene, or 1-octene, from the reactor; and withdrawing a gaseous effluent comprising ethylene gas from the reactor, the gaseous effluent leaving the reactor from an outlet above the plate and the one or more spray nozzles such that the gaseous effluent flows past the plate to the outlet.

Embodiment 9: The process of Embodiment 8, wherein both the plate and the side wall of the reactor have a diameter, and the ratio of the diameter of the plate to the diameter of the side wall of the reactor is about 0.2 to about 0.8, such as about 0.3 to about 0.6.

Embodiment 10: The process of Embodiment 8 or 9, wherein the plate comprises a central portion and an outer portion surrounding the central portion, the outer portion extending from the central portion to the outer peripheral edge, and wherein at least the outer portion is sloped toward the liquid reaction mixture.

Embodiment 11: The process of any one of Embodiments 8-10, wherein an angle of slope of the outer portion of the plate is about 0.1 to about 20 degrees with respect to a horizontal plane, such as an angle of slope of about 2 to about 10 degrees.

Embodiment 12: The process of any one of Embodiments 8-11, wherein the liquid reaction mixture has a surface facing the plate, and the plate is spaced from the one or more spray nozzles by a distance of at least 40% of the distance from the one or more spray nozzles to the surface of the liquid reaction mixture.

Embodiment 13: The process of any one of Embodiments 8-12, further comprising a mounting bracket connected to the plate by one or more struts, optionally wherein one or more of the plate, the struts, and the mounting bracket are constructed of a metal.

Embodiment 14: The process of any one of Embodiments 8-13, wherein the solvent is selected from the group consisting of saturated or unsaturated linear or branched hydrocarbons, ethers, aromatic hydrocarbons which can be unsubstituted or substituted with halogens, halogenated alkanes, and combinations thereof, such as toluene, benzene, xylene, monochlorobenzene, dichlorobenzene, chlorotoluene, pentane, hexane, heptane, octane, nonane, decane, cyclohexane, methylcyclohexane, dichloroethane, dichlorobutane, or a combination thereof.

Embodiment 15: The process of any one of Embodiments 8-14, wherein the process is characterized by one or more of the following as compared to a process conducted in a reactor without a solid unperforated plate mounted within the reaction chamber: reduced catalyst consumption; increased interval between shutdowns adapted to remove fouling from the reactor or any downstream apparatus in fluid communication with the gaseous effluent from the reactor; and reduced condensate produced upon cooling the gaseous effluent from the reactor.

These and other features, aspects, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as combinable, unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying figures which illustrate, by way of example, the principles of some described example implementations.

### BRIEF DESCRIPTION OF THE FIGURES

Having thus described aspects of the disclosure in the foregoing general terms, reference will now be made to the accompanying figures, which are not necessarily drawn to scale, and wherein:
FIG. 1 is a block diagram of an ethylene oligomerization system according to an example implementation of the present disclosure;
FIG. 2 is a simplified schematic diagram of an example ethylene oligomerization reactor in accordance with the present disclosure;
FIG. 3 is a simplified schematic diagram of the top portion of an example ethylene oligomerization reactor in accordance with the present disclosure; and
FIG. 4 is a perspective view of an example implementation of a plate with mounting bracket adapted for use in the present disclosure.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

All ranges disclosed herein are inclusive of the endpoints, and the endpoints are independently combinable with each other (e.g., ranges of "up to 25 wt. %, or, more specifically, 5 wt. % to 20 wt. %", is inclusive of the endpoints and all intermediate values of the ranges of "5 wt. % to 25 wt. %," etc.). "Combination" is inclusive of blends, mixtures, alloys, reaction products, and the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form.

### Ethylene Oligomerization Process and System

Linear alpha olefins (LAOs) are olefins with a chemical formula CₓH₂ₓ, distinguished from other mono-olefins with a similar molecular formula by linearity of the hydrocarbon chain and the position of the double bond at the primary or alpha position. Linear alpha olefins comprise a class of industrially important alpha-olefins, including 1-butene, 1-hexene, 1-octene, 1-decene, 1-dodecene, 1-tetradecene, 1-hexadecene, 1-octadecene, and higher blends of C₂₀-C₂₄, C₂₄-C₃₀, and C₂₀-C₃₀ olefins. Linear alpha olefins are useful intermediates for the manufacture of detergents, synthetic lubricants, copolymers, plasticizers, and many other important products.

Existing processes for the production of linear alpha olefins typically rely on the oligomerization of ethylene. For example, linear alpha olefins can be prepared by the catalytic oligomerization of ethylene in the presence of a Ziegler-Natta-type catalyst or non-Ziegler-Natta-type catalyst.

Oligomerization can occur at temperatures of 10 to 200° C, for example, 20 to 100° C, for example, 50 to 90° C, for example, 55 to 80° C, for example, 60 to 70° C. Operating pressures can be 1 to 5 MegaPascals (MPa), for example, 2 to 4 MPa. The process can be continuous and mean residence times can be 10 minutes to 20 hours, for example 30 minutes to 4 hours, for example, 1 to 2 hours. Residence times can be chosen so as to achieve the desired conversion at high selectivity.

The process can be conducted in solution using an inert solvent, which is advantageously non-reactive with the catalyst composition. Examples of desirable organic solvents can include, but are not limited to, aromatic hydrocarbon solvents which can be unsubstituted or substituted with halogens, for example, toluene, benzene, xylene, monochlorobenzene, dichlorobenzene, chlorotoluene; aliphatic paraffin hydrocarbons, for example, pentane, hexane, heptane, octane, nonane, decane; alicyclic hydrocarbon compounds, for example, cyclohexane, decahydronaphthalene; and halogenated alkanes, for example, dichloroethane and dichlorobutane.

The process can be carried out in any reactor, such as a loop reactor, a plug-flow reactor, or a bubble column reactor. Oligomerization of ethylene is an exothermic reaction that can be cooled by a surplus flow of ethylene. The gases leaving at a top portion of the reactor can be cooled using a series of external coolers and condensers. The gas phase, after further cooling, can be recycled.

A bottom stream leaving the oligomerization reactor from a bottom portion can contain the active catalyst and unreacted ethylene. The reaction can be terminated to avoid undesirable side reactions by removing catalyst components from the organic phase through extraction with a caustic aqueous phase. Contact with the caustic aqueous phase can result in formation of nonreactive minerals corresponding to the catalyst components.

The organic phase, after passage through the catalyst removal system, can pass through a molecular sieve absorption bed and can then be fed to a distillation column to recover dissolved ethylene. Recovered ethylene can be recycled via an ethylene recycle loop while the product is fed to an intermediate vessel, after which the product can be fed to a separation section. In certain embodiments, the linear alpha olefins produced from the reactor can be directed into a separation train.

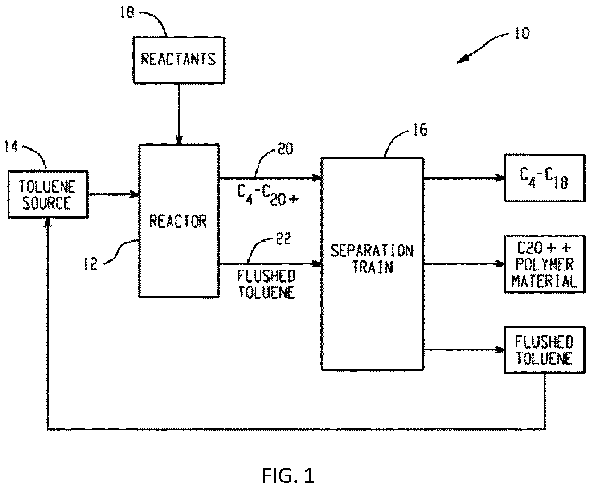

As illustrated in FIG. 1, the system 10 can include a reactor 12, a toluene (or other solvent) source 14, and a separation train 16. In normal production mode, reactants 18, such as ethylene, solvent, and a catalyst can be fed into the reactor 12 to produce linear alpha olefins and a polymeric by-product material. After the reaction, a discharge stream 20 can be directed into the separation train 16, wherein the discharge stream can include unreacted reactants, the produced linear alpha olefins, such as C₄-C₂₀₊, solvent, and catalyst. The separation train 16 can be configured to separate the linear alpha olefins from the solvent, catalyst, and any unreacted ethylene. The separation train 16 can separate each linear alpha olefin, for example, yielding a C₄ stream, C₅ stream, C₆ stream, and so on. The separation train 16 can also separate the linear alpha olefins into certain fractions, such as C₄-C₁₀ fraction, C₁₁-C₁₇ fraction, C₁₈-C₂₀ fraction, C₂₀₊ fractions, or any other desired fraction.

The linear alpha olefin product can be isolated using procedures including aqueous caustic catalyst quench followed by water washing and final product recovery by distillation. For example, the liquid product including the solvent (e.g., toluene) with the dissolved ethylene can be fed to the separation train 16 as noted above. In a first column, the unconsumed ethylene can be separated from the linear alpha olefin product and the solvent. The ethylene can be recycled back to the reactor. The heavier fractions can be routed to the subsequent separation section where the heavier fractions can be divided into the different linear alpha olefin fractions (e.g., C8, C10, >C12). The solvent can be recovered and also recycled back to the reactor.

Polymer fouling within the reactor can occur during the oligomerization reaction process. Such fouling is typically detected by, for example, reduced effluent flow rates, reduced internal condenser performance, increased differential pressure at various locations within the reactor, and the like. Such fouling can be treated by flushing the reactor with toluene or another solvent to remove polymeric material by-product. The flushed toluene comprising the polymeric material can be directed into a separation train comprising the linear alpha olefin reaction products. The polymeric material is soluble in at least one of the linear alpha olefins, such that the flushed toluene can exit the separation train essentially free of the polymeric material and can be recycled back to the toluene source for subsequent flushing of the reactor.

Accordingly, in a flushing mode, the reactor 12 can be flushed with toluene or another solvent from the source 14 to remove the polymeric by-product buildup in the reactor equipment. The flushed toluene containing the polymeric material can be directed into the separation train 16 via line 22. Because the polymeric material is more soluble in the C₂₀₊ linear alpha olefins than toluene, the polymeric material can be separated from the flushed toluene and the C₄-C₁₈ fractions by dissolving into the C₂₀₊ linear alpha olefins. As a result, in certain embodiments, the flushed toluene separated in the separation train 16 can be recycled back to the toluene source for further flushing without needing further purification.

### Bubble Column Reactor

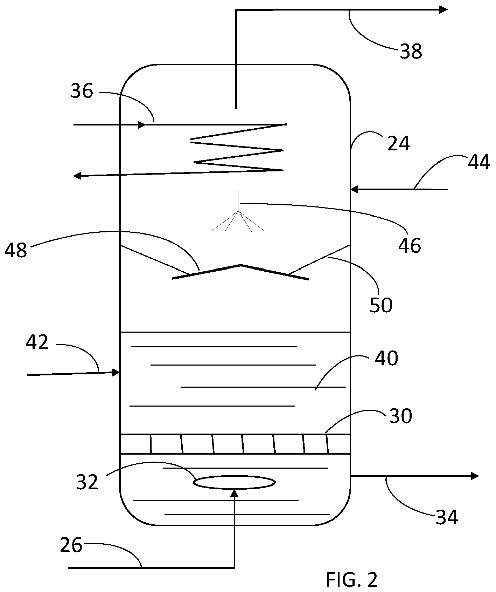

In one embodiment, the oligomerization process can be carried out in a bubble column reactor. FIG. 2 depicts an example bubble column reactor 24 for use in the present disclosure. Ethylene can be introduced using feed stream 26 to the reactor 24 via a gas distribution system attached to a bottom section of the bubble column reactor, which typically includes one or both of a gas sparger plate 30 and a gas bubbler 32. The gas distribution system disperses the gaseous ethylene evenly throughout the reactor 24. Gaseous ethylene rises up through a liquid composition 40 within the reactor 24, which typically includes linear alpha olefins, a solvent such as toluene, and a catalyst. For example, catalyst can enter the reactor 24 through a catalyst injection stream 42. Toluene or another solvent can enter the reactor 24 through solvent injection stream 44, which typically includes one or more spray nozzles 46 that direct solvent downward within the reactor toward the surface of the liquid composition 40. An oligomerization reaction can occur as the gaseous ethylene interacts with the liquid composition, producing reaction products that can include polymer droplets and linear alpha olefin droplets.

The liquid heavy linear alpha olefins, together with the solvent and the catalyst, can be withdrawn from the bottom section of the reactor 24 via bottom effluent stream 34. A portion of the formed linear alpha olefins, which are gaseous under reaction conditions, can be condensed at a top portion of the reactor using an internal condenser 36 and can serve as reflux for cooling purposes, taking advantage of the respective heat of evaporation. The internal condenser 36 is positioned above the spray nozzle 46. Gaseous ethylene and light linear alpha olefins can be removed at the top of the bubble column reactor via top effluent stream 38. One or both effluent streams can be further treated using additional downstream processing units, such as condensers, heat exchangers, distillation columns, and the like. For example, a separation train as shown in FIG. 1 can be used to purify the effluent streams into various product and/or recyclable streams.

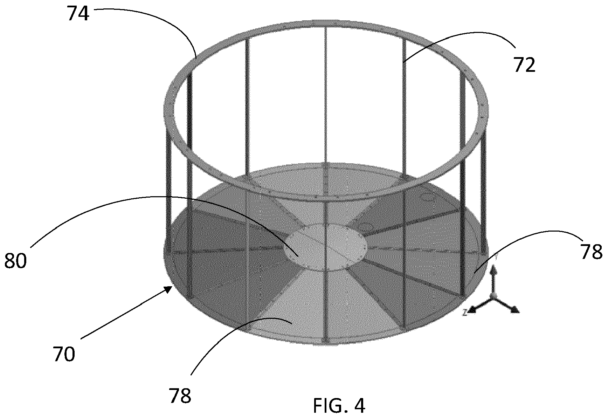

As shown, in the present disclosure, the reaction chamber contains a solid unperforated plate 48 positioned between the spray nozzle 46 and the surface of the liquid composition 40. The plate 48 serves as a barrier between the sprayed droplets of solvent from the spray nozzle 46 and the surface of the liquid composition 40. The plate 48 can be supported by connection to any internal surface within the reactor 24. As shown in FIG. 2, for example, one or more struts 50 can be used to connect the plate to any interior surface of the reactor 24, such as the inner side wall of the reactor. The plate 48, the struts 50, and any other component of the plate assembly (such as the mounting bracket shown in FIG. 4) can be constructed of any material capable of withstanding the conditions of the reactor 24, with examples including a heat-resistant metal or metal alloy, such as titanium or stainless steel.

Without being bound by a theory of operation, it is believed that the presence of the plate reduces or eliminates the formation of mist above the surface of the liquid composition 40 by, for example, reducing the impingement of solvent droplets upon the surface of the liquid composition 40, reducing the velocity of solvent droplets impinging on the liquid composition, and the like. Reduction or elimination of mist above the liquid surface is believed to reduce the transfer of carry-over into the overhead stream exiting the reactor 24, which reduces polymer fouling of downstream equipment. In addition, in certain embodiments, the presence of the plate can also reduce the amount of catalyst entrained in the gaseous effluent leaving the reactor, which reduces catalyst consumption.

In contrast to conventional demister plates, the plate of the present disclosure is solid and unperforated. Conventional demister plates, such as vane demisters or wire mesh demisters, are defined by a large number of channels or orifices adapted to minimize liquid entrainment in a gaseous stream. Such demisters function poorly in oligomerization reactors as described herein due to the difficulty in removing polymer fouling from the plurality of channels or orifices.

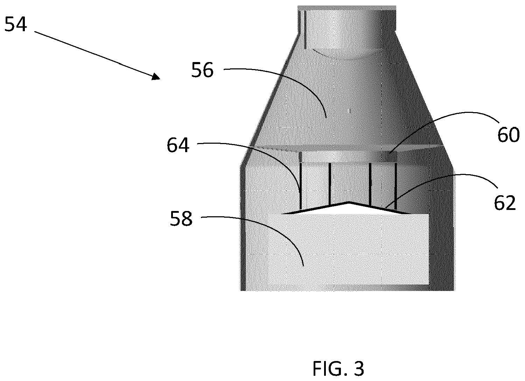

FIG. 3 illustrates the top portion of an oligomerization reactor 54 suitable for use in the present disclosure. As shown, the exemplified reactor 54 can include a narrowed portion 56 overlying a wider lower portion 58 with an orifice 60 between the two. The narrowed portion 56 can house, for example, an internal condenser (not shown) as discussed in connection with FIG. 2. The interior wall surface defining the orifice 60 provide another example mounting surface for connecting a plate 62 through use of one or more struts 64.

FIG. 4 illustrates an example embodiment of a solid, unperforated plate 70 suitable for use in the present disclosure. The plate includes a plurality of struts 72 connecting the plate 70 to a mounting bracket 74, which can be fixedly attached to an interior surface of a reactor as previously described. The manner of attachment of the mounting bracket to the reactor is not limited, and can include use of fixation devices such as screws or rivets. The illustrated embodiment of the plate 70 includes a plurality of substantially trapezoidal plate portions 78 affixed to a central circular piece 80. However, the illustrated embodiment is not limiting. The plate 70 could also be constructed of a single piece of material or constructed of portions having other shapes.

The reaction system can be characterized by the ratio of the diameter of the plate to the diameter of the side wall of the vessel (e.g., the side wall of reactor 24 of FIG. 2). The plate is advantageously sized to provide a barrier to reduce solvent impingement on the surface of the liquid reaction mixture while still allowing space for gaseous effluent to reach the overhead outlet. For example, in certain embodiments, both the plate and the side wall of the vessel have a diameter, and the ratio of the diameter of the plate to the diameter of the side wall of the vessel is about 0.2 to about 0.8, such as about 0.3 to about 0.6 (e.g., about 0.2, about 0.3, about 0.4, about 0.5, about 0.6, about 0.7, or about 0.8).

As noted above, the construction of the plate can vary, and example embodiments include single-piece construction and multi-piece construction, such as an assembly that includes a central portion or piece and an outer portion surrounding the central portion, wherein the outer portion can consist of a single piece or multiple segments. The plate may be substantially planar. Alternatively, at least a portion of the plate can be defined by a slope or angle such that, when installed, at least a portion of the plate is sloped toward the liquid reaction mixture. For example, in embodiments where the plate comprises a central portion and an outer portion surrounding the central portion, the outer portion extending from the central portion to an outer peripheral edge, at least the outer portion can be sloped toward the liquid reaction mixture. In other embodiments, the entire surface of the plate can be sloped, such as a plate configuration having a central peak or point from which the remainder of the plate slopes toward the liquid reaction mixture when installed. For embodiments of the plate having a sloped portion, the angle of slope is typically about 0.1 to about 20 degrees with respect to a horizontal plane, such as an angle of slope of about 2 to about 10 degrees (e.g., about 2 degrees, about 3 degrees, about 4 degrees, about 5 degrees, about 6 degrees, about 7 degrees, about 8 degrees, about 9 degrees, or about 10 degrees).

The reaction system of the present disclosure can be characterized by the distance between the one or more spray nozzles and the plate. For example, in certain embodiments, the liquid reaction mixture has a surface facing the plate, and the plate is spaced from the one or more spray nozzles by a distance of at least 40% of the distance from the one or more spray nozzles to the surface of the liquid reaction mixture. Example distances include about 40% to about 60% or about 40% to about 50% of the distance from the one or more spray nozzles to the surface of the liquid reaction mixture.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention.

Many modifications and other implementations of the disclosure will come to mind to one skilled in the art to which this disclosure pertains having the benefit of the teachings presented in the foregoing descriptions and the associated figures. Therefore, it is to be understood that the disclosure is not to be limited to the specific implementations disclosed herein and that modifications and other implementations are intended to be included within the scope of the appended claims. Although specific terms are employed herein, they are used in a generic and descriptive sense only and not for purposes of limitation.

## Claims

1. A reaction system for production of linear alpha olefins, comprising:
a vessel having a side wall defining an internal reaction chamber containing a liquid reaction mixture, the vessel having an overhead outlet for a gaseous effluent and a bottom outlet for a liquid effluent;
one or more spray nozzles between the overhead outlet and the liquid reaction mixture for spraying a solvent into the reaction chamber; and
a solid unperforated plate mounted within the reaction chamber between the one or more spray nozzles and the liquid reaction mixture, the plate having an outer peripheral edge in spaced relation to the side wall of the vessel such that gaseous effluent from the vessel can flow past the plate to the overhead outlet.

2. The reaction system of claim 1, wherein both the plate and the side wall of the vessel have a diameter, and the ratio of the diameter of the plate to the diameter of the side wall of the vessel is about 0.2 to about 0.8, such as about 0.3 to about 0.6.

3. The reaction system of claim 1, wherein the plate comprises a central portion and an outer portion surrounding the central portion, the outer portion extending from the central portion to the outer peripheral edge, and wherein at least the outer portion is sloped toward the liquid reaction mixture.

4. The reaction system of claim 3, wherein an angle of slope of the outer portion of the plate is about 0.1 to about 20 degrees with respect to a horizontal plane, such as an angle of slope of about 2 to about 10 degrees.

5. The reaction system of claim 1, wherein the liquid reaction mixture has a surface facing the plate, and the plate is spaced from the one or more spray nozzles by a distance of at least 40% of the distance from the one or more spray nozzles to the surface of the liquid reaction mixture.

6. The reaction system of any one of claims 1 to 5, further comprising a mounting bracket connected to the plate by one or more struts, optionally wherein one or more of the plate, the struts, and the mounting bracket are constructed of a metal.

7. The reaction system of any one of claims 1 to 5, further comprising a gas distribution apparatus within the reaction chamber for introducing a gaseous reagent to the liquid reaction mixture, optionally wherein the gas distribution apparatus includes one or more of a gas sparger plate and a gas bubbler.

8. A process for producing linear alpha olefins, comprising:
contacting ethylene gas with a liquid reaction mixture comprising a catalyst and a solvent in a reactor, wherein the reactor comprises a side wall defining an internal reaction chamber containing the liquid reaction mixture and a solid unperforated plate mounted within the reaction chamber, the plate having an outer peripheral edge in spaced relation to the side wall of the reactor;
spraying a solvent into the reactor using one or more spray nozzles such that solvent impinges on the plate prior to contacting the liquid reaction mixture;
withdrawing a product stream comprising at least one linear alpha olefin, such as 1-butene, 1-hexene, or 1-octene, from the reactor; and
withdrawing a gaseous effluent comprising ethylene gas from the reactor, the gaseous effluent leaving the reactor from an outlet above the plate and the one or more spray nozzles such that the gaseous effluent flows past the plate to the outlet.

9. The process of claim 8, wherein both the plate and the side wall of the reactor have a diameter, and the ratio of the diameter of the plate to the diameter of the side wall of the reactor is about 0.2 to about 0.8, such as about 0.3 to about 0.6.

10. The process of claim 8, wherein the plate comprises a central portion and an outer portion surrounding the central portion, the outer portion extending from the central portion to the outer peripheral edge, and wherein at least the outer portion is sloped toward the liquid reaction mixture.

11. The process of claim 10, wherein an angle of slope of the outer portion of the plate is about 0.1 to about 20 degrees with respect to a horizontal plane, such as an angle of slope of about 2 to about 10 degrees.

12. The process of claim 8, wherein the liquid reaction mixture has a surface facing the plate, and the plate is spaced from the one or more spray nozzles by a distance of at least 40% of the distance from the one or more spray nozzles to the surface of the liquid reaction mixture.

13. The process of any one of claims 8 to 12, further comprising a mounting bracket connected to the plate by one or more struts, optionally wherein one or more of the plate, the struts, and the mounting bracket are constructed of a metal.

14. The process of any one of claims 8 to 12, wherein the solvent is selected from the group consisting of saturated or unsaturated linear or branched hydrocarbons, ethers, aromatic hydrocarbons which can be unsubstituted or substituted with halogens, halogenated alkanes, and combinations thereof, such as toluene, benzene, xylene, monochlorobenzene, dichlorobenzene, chlorotoluene, pentane, hexane, heptane, octane, nonane, decane, cyclohexane, methylcyclohexane, dichloroethane, dichlorobutane, or a combination thereof.

15. The process of any one of claims 8 to 12, wherein the process is **characterized by** one or more of the following as compared to a process conducted in a reactor without a solid unperforated plate mounted within the reaction chamber:
a. reduced catalyst consumption;
b. increased interval between shutdowns adapted to remove fouling from the reactor or any downstream apparatus in fluid communication with the gaseous effluent from the reactor; and
c. reduced condensate produced upon cooling the gaseous effluent from the reactor.
